# EUROPÄISCHE PATENTSCHRIFT

(11) **EP 0 882 402 B1**
(45) Veröffentlichungstag und Bekanntmachung des Hinweises auf die Patenterteilung: **28.08.2002**
(21) Anmeldenummer: 98109674.6
(22) Anmeldetag: 27.05.1998
(51) Int. Cl.: A22C 7/00, A21C 11/10

(54) **Diaphragma**
Diaphragm
Diaphragme

(30) Priorität: 03.06.1997 DE 19723228
(43) Veröffentlichungstag der Anmeldung: 09.12.1998
(73) Patentinhaber: Albert Handtmann Maschinenfabrik GmbH & Co. KG, D-88400 Biberach (DE)
(72) Erfinder: Strasser, Alexander, 88276 Berg-Ettlshofen (DE)
(74) Vertreter: Grünecker, Kinkeldey, Stockmair & Schwanhäusser Anwaltssozietät

(56) Entgegenhaltungen:
- EP-A- 0 478 135
- EP-A- 0 553 958
- EP-A- 0 832 562
- WO-A-97/05423
- US-A- 3 292 207

## Beschreibung

Die Erfindung betrifft ein Diaphragma zum Öffnen und Schließen einer Öffnung, im Speziellen für den Einsatz in einer Klößchenformmaschine, mit mehreren beweglich gelagerten Segmenten.

Die Erfindung ist speziell geeignet für ein Klößchenformgerät in der Lebensmittelindustrie, jedoch kann ein erfindungsgemäßes Diaphragma auch an anderen Stellen vorteilhaft eingesetzt werden, bei denen eine Öffnung geschlossen und geöffnet werden muss.

Diaphragmen sind im Allgemeinen aus einer Anzahl von Segmenten aufgebaut, die beweglich gelagert sind. Die einzelnen Segmente führen jedes eine im Wesentlichen gleichartige Bewegung aus. in einer Stellung entsteht dabei eine Öffnung, wobei die einzelnen Segmente um diese Öffnung angeordnet sind. Die Öffnung hat eine Symmetriezähligkeit, die mindestens der Anzahl der Segmente entspricht und wird von Teilbereichen der Ränder der Segmente gebildet. Ein solches Diaphragma ist z.B. im europäischen Patent No. 832562 beschrieben.

Solche Diaphragmen werden z.B. eingesetzt, um pastöse Massen in einzelne Volumeneinheiten zu unterteilen. Bei einer Klößchenformmaschine wird z.B. die Lebensmittelmasse durch das Diaphragma gedrückt und durch Öffnen und Schließen desselben unterteilt. Dabei ist es wünschenwert, das die einzelnen Segmente sich während des Öffnungs- und Schließvorganges nicht überlappen, da sich sonst Lebensmittelmasse zwischen den Segmentoberflächen ansammeln kann, was aus hygienischen Gründen unerwünscht ist.

Es wurden daher Diaphragmen vorgeschlagen, bei denen die Segmente eine solche Form haben, dass sie flächig zusammengesetzt werden können, um die Öffnung abzudecken.

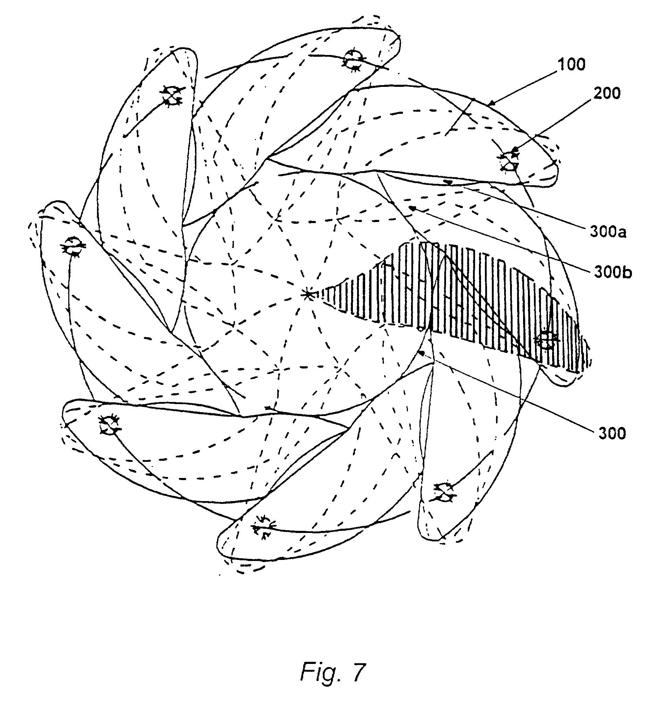

Dies entspricht einer zweiten Stellung des Diaphragmas. Bei bekannten Diaphragmen schwenken die einzelnen Segmente dazu um feststehende Angelpunkte. Während des Öffnungs- bzw. Schliessvorganges entsteht jedoch dabei das Problem, dass sich auch zwischen den einzelnen Segmenten Öffnungen bilden. Ein Beispiel eines solchen Diaphragmas mit speziell geformten Segmenten 100 ist in Figur 7 gezeigt. Dabei zeigen die durchgezogenen Linien die Segmente in geöffnetem Diaphragmazustand. Die gestrichelten Linien zeigen die Segmente in geschlossenem bzw. in einem Zwischenzustand. Exemplarisch ist schraffiert die Lage eines Segmentes 200 in geschlossenem Diaphragmazustand angedeutet.

Gerade beim Einsatz in einem Klößchenformgerät ist es jedoch unerwünscht, dass während des Öffnens bzw. Schließens kein vollständiges Aneinanderliegen der Segmente vorliegt. Die Lebensmittelmasse soll durch das Diaphragma unterteilt werden, z.B. werden Klößchen gebildet. Drückt die Lebensmittelmasse während des Öffnens bzw. Schließens des Diaphragmas auf das Diaphragma, so wird die Masse auch durch evtl. Öffnungen 300a, 300b gedrückt, die sich zwischen den einzelnen Segmenten auftun. Eine genaue Dosierung und Formung ist dementsprechend schlecht möglich.

Ausgehend von dem geschilderten Stand der Technik ist es die Aufgabe der vorliegenden Erfindung, ein einfaches, aber effizientes Diaphragma bereitzustellen, das eine im Wesentlichen kreisförmige Öffnung bilden kann, einfach in der Handhabung ist und im Speziellen zum Einsatz in der Lebensmittelindustrie hygienisch unbedenklich ist.

Erfindungsgemäß wird diese Aufgabe mit einem Diaphragma gelöst, das die Merkmale des Anspruchs 1 hat.

Ein erfindungsgemäßes Diaphragma zum Öffnen und Schließen einer Öffnung mit mehreren beweglich gelagerten Segmenten weist einen Bewegungsmechanismus auf, der die einzelnen Segmente mit zueinander ähnlichen Bewegungsabläufen zwischen Stellungen bewegen kann, in denen die Öffnung geschlossen oder geöffnet ist, wobei die Bewegungsabläufe der einzelnen Segmente sich aus einer Translation und einer Rotation zusammensetzen.

Mit Hilfe eines solchen Diaphragmas ist es möglich, dass auch während des Öffnungsvorganges bzw. des Schließvorganges die Segmente dicht aneinanderliegen. Dies wird erreicht, indem eine translatorische Bewegung eine rotatorischen Bewegung überlagert wird. Dabei gleiten die Segmente dicht aneinanderliegend aneinander ab. Auf diese Weise ist immer nur eine Öffnung im Zentrum des Diaphragmas geöffnet, und es bilden sich also keine Toträume aus. Speziell bei der Anwendung in einem Klößchenformgerät ist auf diese Weise gesichert, dass keine Lebensmittelmasse zwischen die Segmente verbleiben kann, was zu vermehrtem Bakterienwachstum führen würde.

Weiterhin ist es vorteilhaft, wenn jedes Segment mindestens einen Führungsbolzen aufweist, der in einer entsprechenden Nut geführt wird, die zumindest in einem Teilbereich eine Richtung hat, die aus einer tangentialen und einer schräg nach innen weisenden Richtung zusammengesetzt ist. Dies stellt eine einfache Möglichkeit dar, den Bewegungsablauf der einzelnen Segmente festzulegen. Die Bewegung wird durch den Führungsbolzen in der Nut und das aneinander Abgleiten der einzelnen Segmente bestimmt.

Einfacherweise ist die Form der einzelnen Segmente aus einem Dreieck und einem Halbkreis zusammengesetzt, wobei der Halbkreis an einer Seite des Dreiecks anliegt und der Führungsbolzen am Mittelpunkt des Halbkreises an der virtuellen Verbindungsfläche zwischen dem Dreieck und dem Halbkreis liegt. Der jeweils dreieckige Teil der Segmente lässt sich leicht zu einer geschlossenen Fläche zusammensetzen, um die Öffnung zu verschließen.

Gemäß einer Ausführungsform umfassen die Führungsbolzen Vierkantbolzen, die in den Segmenten drehbar gelagert sind. Diese Vierkantbolzen lassen sich in einer entsprechenden Führungsnut sehr präzise führen, um die translatorische Bewegung auszuführen. Die Rotationsbewegung der einzelnen Segmente kann leicht um die drehbare Lagerung ausgeführt werden.

Gemäß einer anderen Ausführungsform haben die Führungsbolzen einen kreisförmigen Querschnitt und bilden mit dem jeweiligen Segment eine starre Einheit. Eine solche starre Einheit ist leicht zu reinigen und bietet keine Möglichkeit, dass sich Lebensmittelmasse in Gelenken oder Drehpunkten festsetzt. Der kreisförmige Querschnitt der Führungsbolzen sichert eine leicht gängige Translationsbewegung in der Führungsnut und ermöglicht eine entsprechende Rotation.

Besonders vorteilhaft ist es, wenn für jedes Segment mindestens ein Federelement zur Rückstellung des Segmentes in eine Ausgangsposition vorgesehen ist. Die Federelemente können dabei so ausgelegt sein, dass das Schließen des Diaphragmas gegen die Federkraft geschieht. Die Öffnung des Diaphragmas geschieht dann aufgrund der Federkraft selbsttätig.

In einer Ausgestaltung sind diese Federelemente Spiralfedern, die um den Führungsbolzen angeordnet sind. Dies stellt eine platzsparende Lösung dar.

Eine andere Ausgestaltung weist Biegefedern als Federelemente auf, die im Außenbereich des Diaphragmas angeordnet sind. Derartige Biegefedem stellen eine einfache Lösung dar und haben Vorteile in hygienischer Hinsicht, da sie im Außenbereich angeordnet sind und keinen Kontakt mit der durch die Öffnung des Diaphragmas tretenden Masse bekommen können. Außerdem ist eine derartige Anordnung leicht zu reinigen.

Bei einer Weiterbildung eines Diaphragmas mit solchen Biegefedern ist ein Gehäuse um das Diaphragma angeordnet, wobei das erste Ende jeder Biegefeder mit je einem Segment verbunden ist und das zweite Ende jeder Biegefeder an der inneren Gehäusewand anliegt. Eine solche Lagerung der Biegefedern ist sehr einfach aufgebaut und leicht zu montieren.

Dabei kann es vorteilhaft sein, wenn die Gehäuseinnenwand nicht kreisförmig ist und einen solchen Verlauf hat, dass der Winkel, der zwischen der Biegefeder und der Gehäusewand an dem Berührungspunkt vorliegt, zu keinem Zeitpunkt des Bewegungsablaufes in der Größenordnung von 90° ist. Die Ausgestaltung der Gehäuseinnenwand derart, dass der Winkel zwischen der Biegefeder und der Gehäusewand nicht zu groß wird, sichert einen verläßlichen Betrieb ohne die Gefahr, dass die Biegefeder verklemmt, im Speziellen, wenn das Diaphragma wieder geöffnet wird.

Bei einer anderen Weiterbildung eines solchen Diaphragmas mit Biegefedern ist das jeweils erste Ende jeder Biegefeder mit je einem Segment verbunden und das zweite Ende jeder Biegefeder greift an dem jeweils benachbarten Segment verschiebbar an. Eine solche Anordnung der Biegefedern ist unabhängig von der Gehäusewand. Durch die Anlage an dem jeweils benachbarten Segment ist gesichert, dass keine zu großen Winkel der Biegefeder an dem Berührungspunkt auftreten, die zu einem Verklemmen führen können. Durch die Gehäuse unabhängige Ausgestaltung der Biegefedem ist eine noch leichtere Montage gesichert. Auch die Reinigung ist auf diese Weise stark vereinfacht.

Vorteilhafterweise ist dabei der jeweilige Angriffspunkt der zweiten Enden der Biegeelemente an der jeweiligen von der Öffnung des Diaphragmas entfernten Außenfläche des jeweils benachbarten Segmentes vorgesehen. Eine solche Anordnung der Biegefedern ermöglicht eine sehr platzsparende und flache Gestaltung des Diaphragmas.

Besonders vorteilhaft ist es, bei einem erfindungsgemäßen Diaphragma mit Biegefedem zur Aufnahme des jeweiligen ersten Endes der jeweiligen Biegefeder in dem entsprechenden Segment eine Führungsöffnung vorzusehen. Eine solche Führungsöffnung ermöglicht eine einfache Montage und Demontage des Diaphragmas.

Vorteilhafterweise ist das Diaphragma so aufgebaut, dass die Federelemente zu keinem Zeitpunkt vollständig entspannt sind. Auf diese Weise sind die Federelemente vorgespannt, was eine Sicherung der gegenseitigen Lage der Segmente in jeder Position gewährleistet.

Eine besonders vorteilhafte Ausführungsform des erfindungsgemäßen Diaphragmas weist eine wellenförmig umlaufende Führungsnut auf, in der alle Führungsbolzen geführt werden. Diese Führungsnut kann so gestaltet sein, dass die Segmente die Diaphragmaöffnung schließen und wieder öffnen, wenn die Führungsbolzen in der Führungsnut entlanggeführt werden. Eine derart geschlossen umlaufende Führungsnut ist besonders leicht zu reinigen. Zudem ist es möglich, die Diaphragmaöffnung periodisch zu öffnen und zu schließen, ohne dass die einzelnen Segmente zurückgeführt werden müssen. Dabei laufen die Führungsbolzen immer in der gleichen Richtung in der umlaufenden Führungsnut um.

Gemäß einer weiteren Ausführungsform des Diaphragmas ist je Segment eine Vielzahl von Führungsbolzen vorgesehen, die in einer entsprechenden Vielzahl von Führungsnuten geführt werden. Bei dieser Ausführungsform werden die einzelnen Segmente durch die einzelnen Führungsbolzen in einer Art Kurvengetriebe bewegt. Dieses Kurvengetriebe sichert die rotatorische und translatorische Bewegung.

Einfacherweise sind dabei die Segmente im Wesentlichen als Dreieck ausgebildet.

Besonders vorteilhaft ist es, wenn je Segment zwei Bolzen vorgesehen sind, die in zwei entsprechenden Führungsnuten bewegt werden. Mit zwei derartigen Führungsbolzen lässt sich ohne weitere konstruktive Maßnahmen die Bewegung der Segmente genau vorbestimmen.

Bei allen obigen Ausführungsformen können vorteilhafterweise acht Segmente für ein Diaphragma vorgesehen werden. Mit acht Segmenten kann bereits eine nahezu kreisförmige Öffnung gebildet werden, ohne dass durch eine zu große Anzahl der Segmente der Aufbau zu komplex würde.

Ein erfindungsgemäßes Diaphragma ist besonders vorteilhaft zum Unterteilen einer pastösen Masse in vorbestimmte Volumeneinheiten einsetzbar.

Im Folgenden werden besonders vorteilhafte Ausführungsformen der Erfindung anhand der anliegenden Figuren erläutert. Dabei zeigt
- Figur 1 a: die Draufsicht auf ein erfindungsgemäßes Diaphragma und
- Figur 1b: eine Teilschnittzeichnung eines Segmentes der Figur 1a;
- Figur 2a: eine zweite Ausführungsform eines erfindungsgemäßen Diaphragmas in Draufsicht; und
- Figur 2b: eine Teilschnittansicht eines Segmentes dieser Ausführungsform der Figur 2a;
- Figur 3: eine dritte Ausführungsform eines erfindungsgemäßen Diaphragmas in Draufsicht;
- Figur 4: eine vierte Ausführungsform eines erfindungsgemäßen Diaphragmas in Draufsicht;
- Figur 5: eine fünfte Ausführungsform eines erfindungsgemäßen Diaphragmas in Draufsicht;
- Figur 6: eine sechste Ausführungsform eines erfindungsgemäßen Diaphragmas in Draufsicht; und
- Figur 7: die Draufsicht auf ein konventionelles Diaphragma.

In Figur 7 ist ein konventionelles Diaphragma dargestellt, das auf einer Rotationsbewegung der einzelnen Segmente basiert. Es sind acht Segmente 100 vorgesehen, die um je einen Drehpunkt 200 drehbar gelagert sind. Mit durchgezogenen Linien sind die Segmente 100 in geöffneter Diaphragmastellung gezeigt. Gestrichelte Linien zeigen die Segmente 100 in geschlossener Stellung bzw. in einer Zwischenstellung. Schraffiert ist ein Segment 100 gezeigt, wie es angeordnet ist, wenn das Diaphragma geschlossen ist. Mit 300 ist die Öffnung bezeichnet, die das geöffnete Diaphragma freigibt.

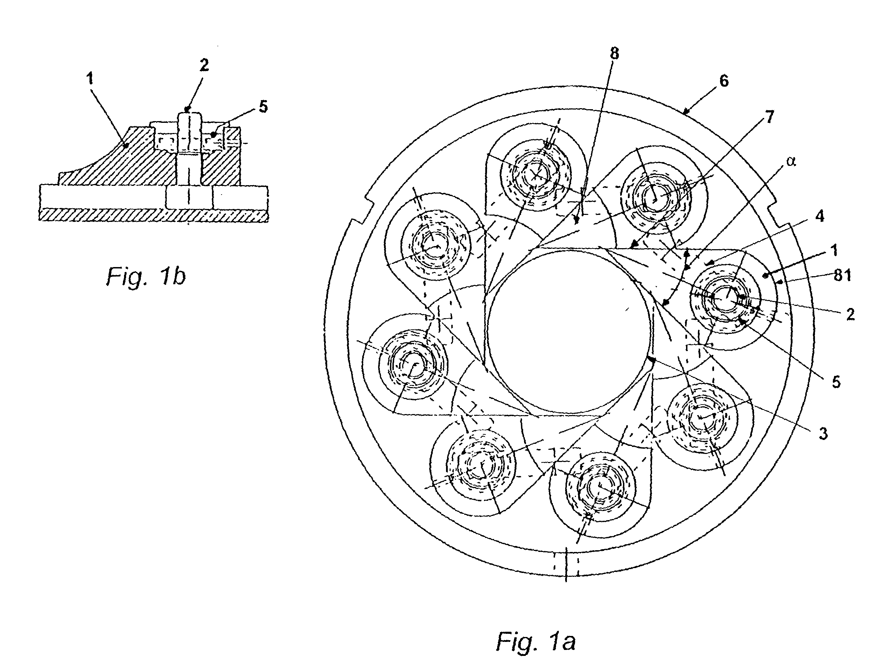

Figur 1 a zeigt eine erste Ausführungsform eines erfindungsgemäßen Diaphragmas in Draufsicht in geöffneter Stellung. 1 bezeichnet eines von acht gleichartigen Verschlußsegmenten. In Draufsicht ist die Kontur eines solchen Segmentes aus einem Halbkreis 81 und einem Dreieck 8 kombiniert. Das Dreieck hat einen Winkel α von 45° bei der gezeigten Ausführungsform mit acht Verschlußsegmenten. An der Seite, die dem Winkel α gegenüberliegt, schließt sich die Form des Halbkreises 81 an. An dem Segment ist an der Unterseite (bezüglich der Blickrichtung) ein Führungsbolzen 2 gelagert, der sich gegenüber dem Segment drehen kann. Die Verbindung zwischen dem Führungsbolzen 2 und dem Segment 1 ist an der imaginären Verbindungslinie zwischen dem oben beschriebenen Dreieck 8 und dem Halbkreis 81 am Mittelpunkt des Halbkreises ausgebildet. Im unteren Bereich ist der Führungsbolzen 2 als Vierkant ausgebildet, im oberen Bereich mit rundem Querschnitt. Der Vierkant läuft in einer Führungsnut 4, die sich unterhalb des Diaphragmas befindet. Die Führungsnut 4 für jedes Segment 1 ist dabei schräg angeordnet, d.h. zusammengesetzt aus einer tangentialen Komponente und einer radialen Komponente, bezüglich der Öffnung des Diaphragmas gesehen. Das innere Ende der einzelnen Führungsnuten 4 hat einen Abstand vom Mittelpunkt der Diaphragmaöffnung entsprechend dem Abstand des Führungsbolzens von der Spitze des jeweiligen Segmentes 1. Das Diaphragma ist in einem Gehäuse 6 eingefasst. 3 bezeichnet die Öffnung, die das geöffnete Diaphragma freigibt.

In Figur 1b ist ein seitlicher Querschnitt eines Segmentes 1 gezeigt. Man erkennt die Spiralfeder 5, die um den Führungsbolzen 2 gelegt ist. Die Spiralfeder 5 ist an ihrem äußeren Ende an dem Segment 1 festgelegt und an ihrem inneren Ende an dem Führungsbolzen 2. In Figur 1 a wird jedes einzelne Segment durch die Spiralfeder 5 in Uhrzeigerrichtung vorgespannt.

Der Betrieb des Diaphragmas der ersten Ausführungsform der Erfindung wird im Folgenden beschrieben. Mit Hilfe eines nicht näher gezeigten Mechanismus werden die Vierkante der Führungsbolzen 2 entlang der Führungsnuten 4 bewegt. Der Bewegungsmechanismus kann dabei z.B. ein von außen angetriebenes Rad mit einem Innendurchmesser etwa in der Größe des Außendurchmessers des Diaphragmas sein, wobei von diesem Innendurchmesser je Segment ein Stift nach innen weist, der an den Führungsbolzen 2 z.B. an dem Teil angreift, der nach oben über das Diaphragma hinaussteht. Eine Drehung eines solchen Rades führt dann zu einer Verschiebung der Führungsbolzen entlang der Führungsnuten 4, d.h. einer translatorischen Bewegung. Es ist jedoch auch jeder andere Mechanismus zur Bewegung der Führungsbolzen denkbar. Zwei benachbarte Segmente 1 gleiten dabei an der Berührungsfläche 7 aneinander ab. Das Abgleiten der benachbarten Flächen 7 aneinander führt dazu, dass die Segmente und die Führungsbolzen 2 sich nach innen entgegen dem Uhrzeigersinn um eine Achse drehen, die parallel zu den Führungsbolzen ist und mit den Führungsbolzen verschoben wird. Die Bewegung der Führungsbolzen 2 und damit der Segmente 1 erfolgt für alle Segmente synchron. Die achteckige Öffnung des Diaphragmas dreht und verkleinert sich dabei.

Ist der Führungsbolzen jedes Segments 1 am Ende der Führungsnut 4 angelangt, so füllen die dreieckigen Spitzen 8 der acht Segmente die Öffnung vollständig aus und dichten auf diese Weise die Öffnung ab. Durch Umkehrung des Prozesses wird das Diaphragma wieder geöffnet. Dieser Öffnungsprozess wird durch die einzelnen Spiralfedern 5 ausgelöst. Durch die Spannung der Federn 5, die durch die Rotation um die Führungsbolzen 2 vergrößert wird, wird beim Lösen des Schließmechanismus jedes Segment im Uhrzeigersinn gedreht. Durch das Abgleiten an der Fläche 7 benachbarter Segmente werden diese automatisch entlang der Führungsnut 4 nach außen getrieben. Zur Portionierung von Lebensmitteln kann ein solches erfindungsgemäßes Diaphragma eingesetzt werden, wenn es am Ausgang z.B. einer Klößchenformmaschine angebracht ist. Die pastöse Lebensmittelmasse wird durch ein Rohr dem Diaphragma zugeführt. Durch periodisches Öffnen und Schließen werden einzelne Klößchen abgeformt.

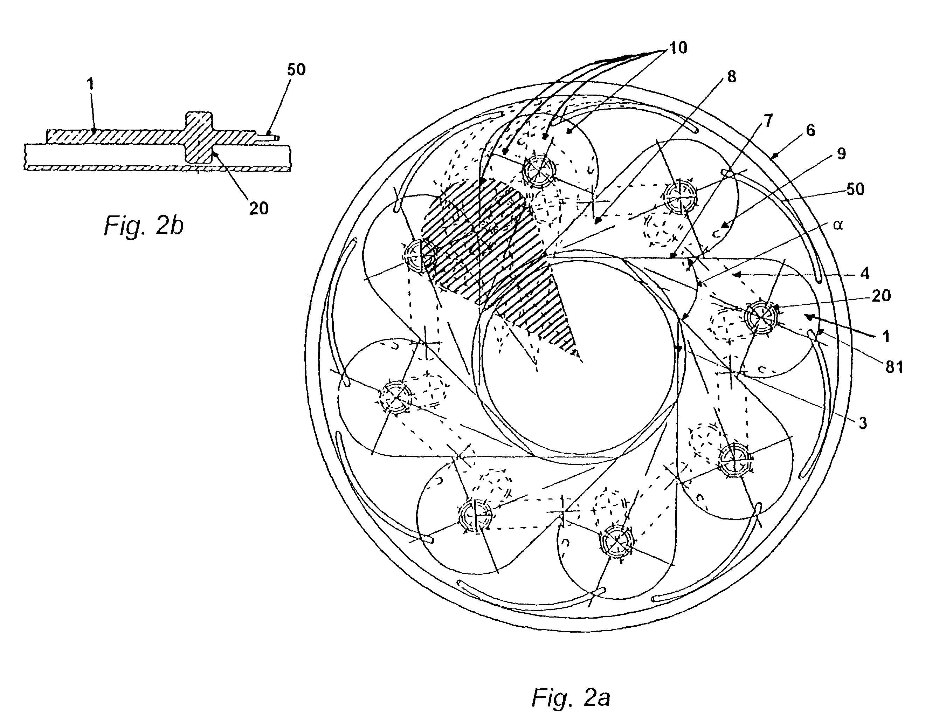

Figur 2a zeigt in Draufsicht eine weitere Ausführungsform eines erfindungsgemäßen Diaphragmas und Figur 2b zeigt eine Schnittansicht eines Segmentes dieser Ausführungsform. Funktionsgleiche Elemente sind mit denselben Bezugsziffern bezeichnet wie in Figur 1. Jedes Segment 1 ist einstückig mit einem Führungsbolzen 20 runden Querschnittes versehen. Ähnlich wie in der Figur 1 läuft dieser Führungsbolzen 20 in einer Führungsnut 4. Die Rückstellkraft zum Öffnen des Diaphragmas wird bei der zweiten Ausführungsform durch eine Biegefeder 50, z.B. einer Blattfeder, zur Verfügung gestellt. Es ist für jedes Segment 1 eine Biegefeder 50 vorgesehen. Das eine Ende der Biegefeder 50 liegt an der Innenwand des Gehäuses 6 an. Das andere Ende kann in einer Einstecköffnung 9 des entsprechenden Segmentes eingeführt werden. Dadurch wird das Segment in Uhrzeigerrichtung entsprechend der gezeigten Figur vorgespannt. Wie bei der ersten Ausführungsform werden durch eine nicht gezeigte Vorrichtung die einzelnen Segmente mit den Führungsbolzen 20 entlang der Führungsnut 4 geführt. Neben der translatorischen Bewegung entlang der Führungsnut 4 wird durch das aneinander Abgleiten der Berührungsflächen 7 auch bei der zweiten Ausführungsform eine Rotationsbewegung ausgeführt. Für ein herausgegriffenes Segment 10 ist dieser Bewegungsablauf durch gestrichelte Linien in der Figur 2a dargestellt. In geschlossenem Zustand zeigen die Spitzen 8 der einzelnen Segmente 1 zum Mittelpunkt der Öffnung 3. Für das Element 10 ist dieser Zustand schraffiert dargestellt. Zum Öffnen des Diaphragmas wird der nicht gezeigte Mechanismus gelöst und die Biegefedern 50 entspannen sich. Dadurch wird eine Rotationsbewegung der einzelnen Segmente 1 in Uhrzeigerrichtung ausgelöst. Aneinander abgleitend an den Flächen 7 bewegen sich dadurch die Segmente 1 entlang der Führungsnuten 4 nach außen und das Diaphragma öffnet sich. Dabei kann die Biegefeder 50 an der Gehäuseinnenwand 6 frei entlang gleiten.

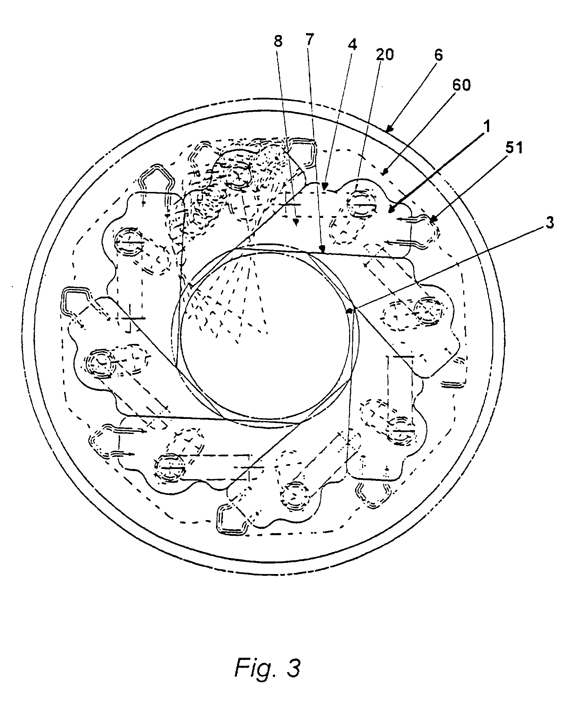

Bei einer dritten Ausführungsform, die in Figur 3 gezeigt ist, ist die Gehäuseinnenwand des Gehäuses 6 mit einer Kulisse 60 ausgeführt, die nicht kreisförmig ist. Für jedes Segment steht ein nahezu linearer Bereich dieser Kulisse 60 zur Verfügung. Eine Biegefeder 51 ist in Kontakt mit dieser linearen Fläche der Kulisse 60. Die besondere Ausgestaltung der Kulisse 60 gewährleistet, dass die Biegefeder 51 immer glatt entlang der Kulisse 60 laufen kann, ohne dass zu große Biegewinkel zu einem Verklemmen führen können. Ansonsten ist die Funktionsweise der dritten Ausführungsform gleich der der zweiten Ausführungsform.

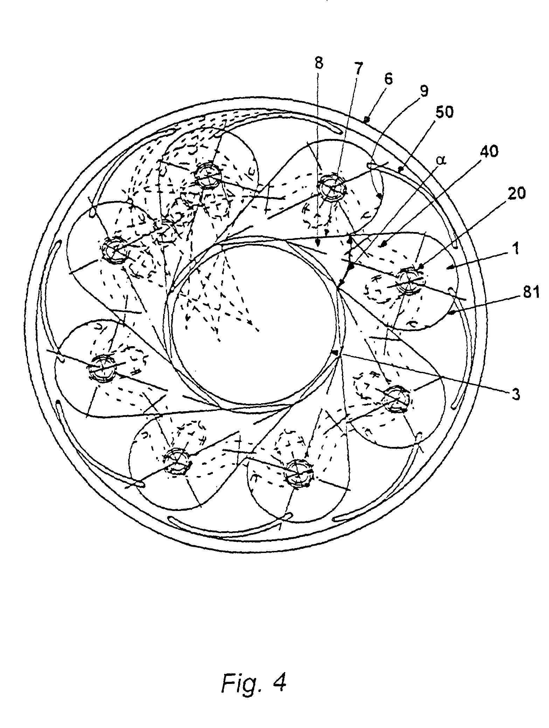

Figur 4 zeigt eine Draufsicht einer vierten Ausführungsform. Die Federn und Segmente sind der zweiten Ausführungsform gleich ausgebildet. Im Gegensatz zur zweiten Ausführungsform ist nicht für jedes Segment 1 eine einzelne Führungsnut 4 vorgesehen, sondern eine wellenförmig umlaufende Führungsnut 40, in der alle Führungsbolzen 20 entlanglaufen. Der kleinste Abstand dieser Nut 40 von der Mitte der Diaphragmaöffnung entspricht dem Abstand eines Führungsbolzens 20 von der Spitze des entsprechenden Segmentes.

Die Funktionsweise des Diaphragmas der vierten Ausführungsform, die in Figur 4 gezeigt ist, ist der der Figur 2 ähnlich. Die umlaufende Führungsnut lässt sich jedoch noch viel einfacher reinigen und warten. Bei entsprechender Ausgestaltung der Form der Führungsnut 40 ist ein periodischer Betrieb des Diaphragmas möglich, ohne dass die einzelnen Führungselemente mit ihren Führungsbolzen 20 in der Führungsnut 40 zurücklaufen müssen. Einfaches Entlangführen der Führungsbolzen 20 entlang der umlaufenden Führungsnut 40 führt automatisch zu einem periodischen Öffnen und Schließen des Diaphragmas. Dies führt zu einem sehr schnellen Betrieb des Diaphragmas bei der Portionierung von pastösen Lebensmittelmassen zu einer hohen Portionszahl.

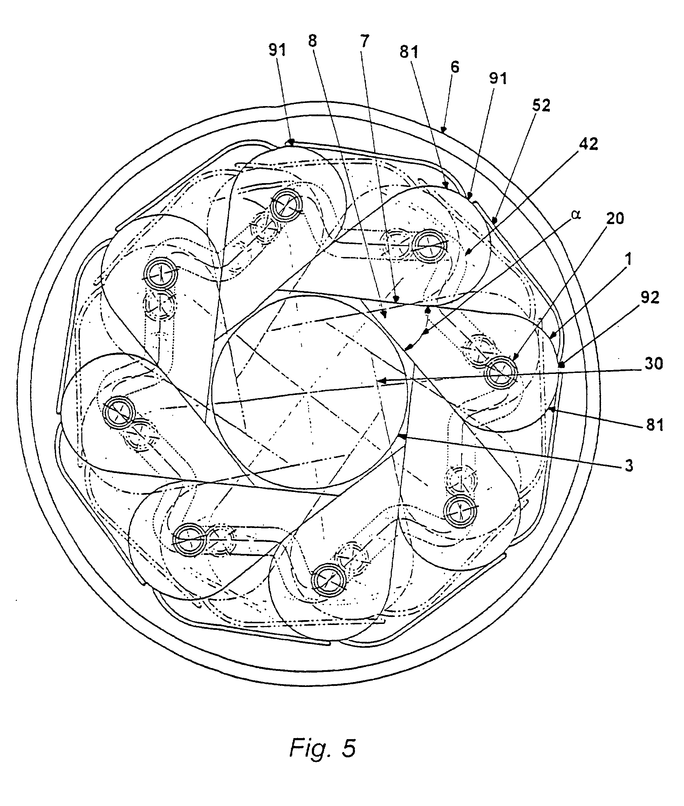

Eine fünfte Ausführungsform ist in der Figur 5 in Draufsicht gezeigt. Die Führungsbolzen 20 laufen in einer wellenförmig angeordneten Führungsnut 42 im Gegenuhrzeigersinn, um die Segmente 1 so zu bewegen, dass sie die Öffnung 3 verschließen. Ein Zwischenzustand der Öffnung ist mit 30 bezeichnet. Die achteckige Öffnung verkleinert sich, je weiter sich die einzelnen Segmente 1 im Gegenuhrzeigersinn bewegen. Biegefedern 52 sind in Einstecklöchern 92 der einzelnen Segmente 1 eingesteckt. Das zweite Ende der Biegefedern 52 liegt an dem jeweils benachbarten Segment an der Berührungsfläche 91 an. Die Spannung der Biegefeder ist derart gewählt, dass sich die Biegefeder 52 an dem Anlagepunkt 91 abdrückt, um das Segment, in dessen Einsteckloch 92 sie befestigt ist, im Uhrzeigersinn zu drehen. Damit die Biegefeder dabei nicht verkantet, sind die Segmente in dem Bereich 81, der der Spitze des jeweiligen Segmentes 1 gegenüberliegt, halbrund ausgeführt. Auf diese Weise kann die Biegefeder 52 an dem jeweiligen Segment an dem Berührungspunkt 91 abgleiten. Diese besondere Ausgestaltung der Biegefedern macht das Diaphragma von der Gehäuseinnenwand des Gehäuses 6 unabhängig. Im Betrieb bewegen sich die einzelnen Segmente 1 über den Zwischenzustand, dessen Öffnung mit 30 bezeichnet ist, zum geschlossenen Zustand. Der Zwischenzustand ist in Figur 5 strichpunktiert markiert. Die Funktionsweise ähnelt mit Ausnahme der Biegefedern 52 der vierten Ausführungsform.

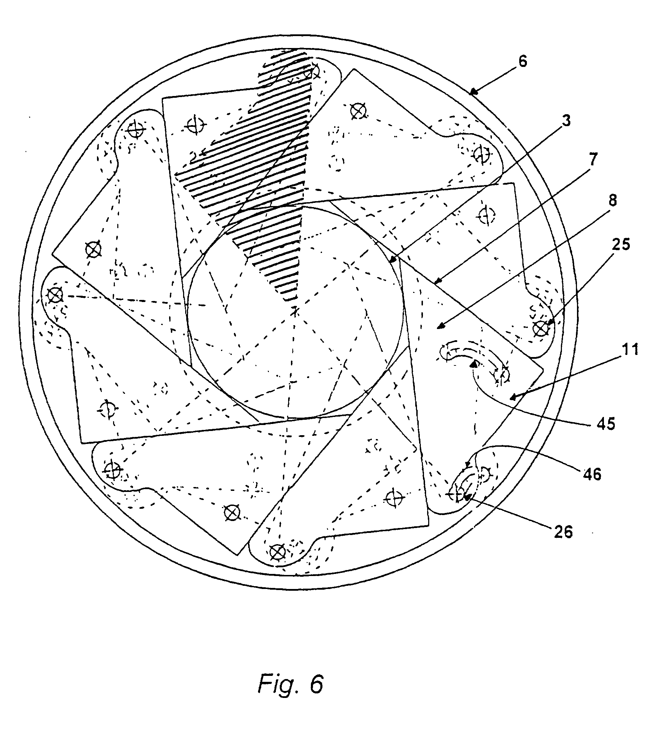

Figur 6 zeigt eine sechste Ausführungsform. An jedem Segment 11 befinden sich unterhalb (mit Bezug zu der Blickrichtung der Figur 6) zwei Führungsbolzen 25, 26 kreisförmigen Querschnitts, die sich in eigenen Führungsnuten 45 bzw. 46 bewegen können. Durch die spezielle Form der Führungsnuten 45, 46, wie in Figur 6 angedeutet, ist die Bewegung des Segmentes vollständig vorbestimmt. Gestrichelt gezeigt sind Zwischenzustände und der geschlossene Diaphragmazustand. Der Übersichtlichkeit halber sind Bolzen und Nuten nur für ein Segment 11 in der Figur 6 gezeigt. Schraffiert ist die Lage eines Segmentes 11 gezeigt, wenn das Diaphragma geschlossen ist. Ebenso wie bei den ersten bis fünften Ausführungsformen führen die Segmente 11 bei der sechsten Ausführungsform eine translatorische und rotatorische Bewegung durch. Dabei gleiten die Flächen 7 aneinander ab, ohne eine zusätzliche Öffnung zu bilden.

Alle beschriebenen Ausführungsformen weisen einen einfachen Aufbau mit wenigen Teilen auf, der kostengünstig hergestellt werden kann. Das sich schließende Achteck des Diaphragmas dreht sich. Es wird also ein gleichmäßiger Schließvorgang eingehalten. Die Führungsnuten machen eine einfache Reinigung möglich. Die translatorische und gleichzeitige rotatorische Bewegung führt zu einem vollständig schließenden Diaphragma, wobei auch während des Schließvorganges die einzelnen Segmente dicht aneinander anliegen.

Besonders beim Portionieren von pastösen Lebensmittelmassen ergeben sich durch den einfachen Aufbau und die leichte Reinigungsmöglichkeit erhebliche hygienische Vorteile.

## Patentansprüche

1. Vorrichtung zur Unterteilung einer pastösen Lebensmittelmasse in vorbestimmte Volumeneinheiten, im speziellen für den Einsatz in einer Klößchenformmaschine, mit einem Diaphragma zum Öffnen und Schließen einer Öffnung, das mehrere beweglich gelagerte Segmente (1, 11) und einen Bewegungsmechanismus aufweist, der die einzelnen Segmente (1, 11) mit zueinander ähnlichen Bewegungsabläufen zwischen Stellungen bewegen kann, in denen die Öffnung geschlossen oder geöffnet ist, wobei sich die Bewegungsabläufe der einzelnen Segmente (1, 11) aus einer Translation und einer reinen Rotation zusammensetzen, **dadurch gekennzeichnet, dass** die Form der einzelnen Segmente (1) aus einem Dreieck (8) und einem Halbkreis (81) zusammengesetzt ist, wobei der Halbkreis (81) an einer Seite des Dreieckes (8) anliegt und der Führungsbolzen (2, 20) am Mittelpunkt des Halbkreises (81) an der virtuellen Verbindungslinie zwischen Dreieck (8) und Halbkreis (81) befestigt ist.

2. Vorrichtung nach Anspruch 1, **gekennzeichnet durch** je mindestens einen Führungsbolzen (2, 20, 25, 26) an jedem Segment (1, 11), der in einer Nut (4, 40, 42, 45, 46) geführt wird, die mindestens in einem Teilbereich eine Richtung hat, die aus einer tangentialen und einer schräg nach innen weisenden Richtung zusammengesetzt ist.

3. Vorrichtung nach einem der Ansprüche 1 oder 2, **dadurch gekennzeichnet, dass** die Führungsbolzen (2) Vierkantbolzen umfassen, die in den Segmenten (1) drehbar gelagert sind.

4. Vorrichtung nach einem der Ansprüche 1 oder 2, **dadurch gekennzeichnet, dass** die Führungsbolzen (20) einen kreisförmigen Querschnitt haben und mit dem jeweiligen Segment (1) eine starre Einheit bilden.

5. Vorrichtung nach einem der Ansprüche 1 bis 4, **gekennzeichnet durch** je mindestens ein Federelement (5, 50, 51, 52) für jedes Segment (1) zur Rückstellung des Segmentes (1) in eine Ausgangsposition.

6. Vorrichtung nach Anspruch 5, **dadurch gekennzeichnet, dass** das Schließen des Diaphragmas gegen die Federkraft der Federelemente (5, 50, 51, 52) geschieht.

7. Vorrichtung nach einem der Ansprüche 5 oder 6, **dadurch gekennzeichnet, dass** die Federelemente Spiralfedern (5) sind, die um die Führungsbolzen (2) angeordnet sind.

8. Vorrichtung nach einem der Ansprüche 5 oder 6, **dadurch gekennzeichnet, dass** die Federelemente Biegefedem (50, 51, 52) sind, die im Außenbereich der Segmente (1) angeordnet sind.

9. Vorrichtung nach Anspruch 8, **gekennzeichnet durch** ein Gehäuse (6), das um das Diaphragma angeordnet ist, wobei ein erstes Ende jeder Biegefeder (50, 51) mit je einem Segment (1) verbunden ist und das zweite Ende jeder Biegefeder (50, 51) an der Gehäusewand anliegt.

10. Vorrichtung nach Anspruch 9, **dadurch gekennzeichnet, dass** die Gehäuseinnenwand (60) nicht kreisförmig ist und einen solchen Verlauf hat, dass der Winkel, der zwischen der Biegefeder (51) und der Gehäuseinnenwand (60) an dem Berührungspunkt vorliegt, zu keinem Zeitpunkt des Bewegungsablaufes in der Größenordnung von 90° ist.

11. Vorrichtung nach Anspruch 8, **dadurch gekennzeichnet, dass** das erste Ende jeder Biegefeder (52) mit je einem Segment (1) verbunden ist und das zweite Ende jeder Biegefeder (52) an dem jeweils benachbarten Segment verschiebbar angreift.

12. Vorrichtung nach Anspruch 11, **dadurch gekennzeichnet, dass** der jeweilige Angriffspunkt (91) der zweiten Enden der Biegeelemente (52) an der jeweiligen von der Diaphragmaöffnung entfernten Außenfläche des jeweiligen Segmentes (1) ist.

13. Vorrichtung nach einem der Ansprüche 8 bis 12, **gekennzeichnet durch** je eine Führungsöffnung (9, 92) in jedem Segment zur Aufnahme des einen Endes der Biegefeder (50, 51, 52).

14. Vorrichtung nach einem der Ansprüche 5 bis 13, **dadurch gekennzeichnet, dass** die Federelemente (5, 50, 51, 52) zu keinem Zeitpunkt des Öffnens oder Schließens vollständig entspannt sind.

15. Vorrichtung nach mindestens einem der vorherigen Ansprüche, zumindest jedoch nach Anspruch 2, **gekennzeichnet durch** eine wellenförmig umlaufende Führungsnut (40, 42), in der alle Führungsbolzen (20) aller Segmente (1) geführt werden.

16. Vorrichtung nach Anspruch 2, **gekennzeichnet durch** eine Vielzahl von Führungsbolzen (25, 26) je Segment (11), die in einer entsprechenden Vielzahl von Führungsnuten (45, 46) geführt werden.

17. Vorrichtung nach Anspruch 16, **dadurch gekennzeichnet, dass** die Segmente (11) im Wesentlichen dreieckig ausgebildet sind.

18. Vorrichtung nach einem der Ansprüche 16 oder 17, **dadurch gekennzeichnet, dass** zwei Führungsbolzen (25, 26) je Segment (11) vorgesehen sind, die in zwei entsprechenden Führungsnuten (45, 46) geführt werden.

19. Vorrichtung nach einem der vorherigen Ansprüche, **dadurch gekennzeichnet, dass** acht Segmente (1,11) vorgesehen sind.

## Claims

1. Device for dividing a paste-like food mass into predetermined unit volumes, especially for use in a dumpling moulding machine, having a diaphragm for opening and closing an aperture which diaphragm possesses a plurality of movably mounted segments (1, 11) and a movement mechanism which can move the individual segments (1, 11) with motion sequences similar to one another in which the aperture is closed or opened, wherein the motion sequences of the individual segments (1, 11) are composed of a translation and a clean rotation, **characterised in that** the shape of the individual segments (1) is composed of a triangle (8) and a semicircle (81), wherein the semicircle (81) fits against a side of the triangle (8) and the guide bolt (2, 20) is fastened at the centre of the semicircle (81) on the virtual connecting line between the triangle (8) and semicircle (81).

2. Device according to Claim 1, **characterised by** at least one guide bolt (2, 20, 25, 26) on each segment (1, 11) which bolt is led in a groove (4, 40, 42, 45, 46) which at least in one part region has a direction which is composed of a tangential and an inwardly sloping direction.

3. Device according to one of Claims 1 or 2, **characterised** the guide bolts (2) comprise square bolts which are mounted rotatably in the segments (1).

4. Device according to one of Claims 1 or 2, **characterised in that** the guide bolts (20) have a circular cross-section and form a rigid unit with the segment (1) in question.

5. Device according to one of Claims 1 to 4, **characterised by** at least one spring member (5, 50, 51, 52) for each segment (1) for restoring the segment (1) into a starting position.

6. Device according to Claim 5, **characterised in that** closure of the diaphragm occurs against the elastic force of the spring member (5, 50, 51, 52).

7. Device according to one of Claims 5 or 6, **characterised in that** the spring members are spiral springs (5) which are arranged about the guide bolts (2).

8. Device according to one of Claims 5 or 6, **characterised in that** the spring members are flexional springs (50, 51, 52) which are arranged in the outer region of the segments (1).

9. Device according to Claim 8, **characterised by** a housing (6) which is arranged around the diaphragm, wherein a first end of each flexional spring (50, 51) is each connected to a segment (1) and the second end of each flexional spring (50, 51) fits against the housing wall.

10. Device according to Claim 9, **characterised in that** the inner wall of the housing (60) is not circular and is of such a shape that the angle between the flexional spring (51) and the inner wall of the housing (60) at the point of contact is at no time in the movement sequence of the order of 90°.

11. Device according to Claim 8, **characterised in that** the first end of each flexional spring (52) is each connected to a segment (1) and the second end of each flexional spring (52) displaceably engages against the neighbouring segment in each case.

12. Device according to Claim 11, **characterised in that** the respective point of engagement (91) of the second ends of the flexional members (52) is on the respective outer surface of the segment (1) in question remote from the diaphragm opening.

13. Device according to one of Claims 8 to 12, **characterised by** a guide opening (9, 92) in each segment for receiving one end of the flexional spring (50, 51, 52).

14. Device according to one of Claims 5 to 13, **characterised in that** the spring members (5, 50, 51, 52) are at no time completely tension-free during opening or closing.

15. Device according to at least one of the preceding claims, at least, however, to Claim 2, **characterised by** a guide groove of undulating perimeter (40, 42) in which all guide bolts (20) of all segments (1) are led.

16. Device according to Claim 2, **characterised by** a large number of guide bolts (25, 26) per segment (11) which are led in a correspondingly large number of guide grooves (45, 46).

17. Device according to Claim 16, **characterised in that** the segments (11) are of substantially triangular construction.

18. Device according to one of Claims 16 or 17, **characterised in that** two guide bolts (25, 26) per segment (11) are provided which are led in two corresponding guide grooves (45, 46).

19. Device according to one of the preceding claims, **characterised in that** eight segments (1, 11) are provided.

## Revendications

1. Dispositif destiné à diviser une masse de produit alimentaire pâteuse en unités volumiques prédéfinies, en particulier à l'utilisation dans une machine à former des boulettes, comportant pour l'ouverture et la fermeture d'un orifice un diaphragme, qui présente plusieurs segments (1, 11) supportés mobiles et un mécanisme d'actionnement qui peut déplacer les différente segments (1, 11) suivant des processus de déplacement similaires les uns aux autres entre des positions dans lesquelles l'orifice est fermé ou ouvert, les processus de déplacement des différents segments (1, 11) se composant d'une translation et d'une rotation pure, **caractérisé en ce que** la forme des différents segments (1) est constituée d'un triangle (8) et d'un demi-cercle (81), le demi-cercle (81) étant adjacent à un côté du triangle (8) et la goupille de guidage (2, 20) étant fixée au centre du demi-cercle (81) sur la ligne de jonction virtuelle entre triangle (8) et demi-cercle (81).

2. Dispositif selon la revendication 1, **caractérisé par** au moins une goupille de guidage (2, 20, 25, 26) sur chaque segment (1, 11), qui est guidée dans une rainure (4, 40, 42, 45, 46), qui comporte au moins dans une zone partielle un tracé, qui se compose d'un tracé tangentiel et d'un tracé orienté obliquement vers l'intérieur.

3. Dispositif selon l'une des revendications 1 et 2, **caractérisé en ce que** les goupilles de guidage (2) comportent des goupilles à quatre pans, qui sont supportées capables de rotation dans les segments (1).

4. Dispositif selon l'une des revendications 1 et 2, **caractérisé en ce que** les goupilles de guidage (20) ont une section transversale circulaire et forment avec le segment (1) respectif une unité solidaire.

5. Dispositif selon l'une des revendications 1 à 4, **caractérisé par** au moins un élément élastique (5, 50, 51, 52) pour chaque segment (1) pour le retour du segment (1) dans une position initiale.

6. Dispositif selon la revendication 5, **caractérisé en ce que** la fermeture du diaphragme s'opère contre la force élastique des éléments élastiques (5, 50, 51, 52).

7. Dispositif selon l'une des revendications 5 et 6, **caractérisé en ce que** les éléments élastiques sont des ressorts hélicoïdaux (5) qui sont disposés autour des goupilles de guidage (2).

8. Dispositif selon l'une des revendications 5 et 6, **caractérisé en ce que** les éléments élastiques sont des ressorts à lame (50, 51, 52) qui sont disposés dans la zone extérieure des segments (1).

9. Dispositif selon la revendication 8, **caractérisé par** un carter (6) qui est disposé autour du diaphragme, dans lequel une première extrémité de chaque ressort à lame (50, 51) est assemblée respectivement à un segment (1) et la seconde extrémité de chaque ressort à lame (50, 51) est en appui sur la paroi du carter.

10. Dispositif selon la revendication 9, **caractérisé en ce que** la paroi intérieure du carter (60) n'est pas circulaire et a un profil tel que l'angle inscrit entre le ressort à lame (51) et la paroi intérieure du carter (60) sur le point de contact, n'est à aucun moment du processus de déplacement de l'ordre de 90°.

11. Dispositif selon la revendication 8, **caractérisé en ce que** la première extrémité de chaque ressort à lame (52) est en liaison avec respectivement un segment (1) et la seconde extrémité de chaque ressort à lame (52) vient en prise de manière capable de translation sur le segment respectivement adjacent.

12. Dispositif selon la revendication 11, **caractérisé en ce que** le point d'application (91) respectif de la seconde extrémité des éléments à lame (52) se situe sur la surface extérieure du segment (1) respectif éloignée de l'ouverture du diaphragme.

13. Dispositif selon l'une des revendications 8 à 12, **caractérisé par** respectivement une ouverture de guidage (9, 92) dans chaque segment, pour loger une extrémité du ressort à lame (50, 51, 52).

14. Dispositif selon l'une des revendications 5 à 13, **caractérisé en ce que** les éléments élastiques (5, 50, 51, 52) à aucun moment de l'ouverture ou de la fermeture ne sont complètement détendus.

15. Dispositif selon au moins l'une des revendications précédentes, toutefois au moins selon la revendication 2, **caractérisé par** une rainure de guidage (40, 42) s'étendant en forme ondulée, dans laquelle sont guidées toutes les goupilles de guidage (20) de tous les segments (1).

16. Dispositif selon la revendication 2, **caractérisé par** une pluralité de goupilles de guidage (25, 26) par segment (11), qui sont guidées dans une pluralité correspondante de rainures de guidage (45, 46).

17. Dispositif selon la revendication 16, **caractérisé en ce que** les segments (11) sont essentiellement configurés en triangle.

18. Dispositif selon l'une des revendications 16 et 17, **caractérisé en ce que** sont prévues par segment (11) deux goupilles de guidage (25, 26) qui sont guidées dans deux rainures de guidage (45, 46) correspondantes.

19. Dispositif selon l'une des revendications précédentes, **caractérisé en ce que** huit segments (1, 11) sont prévus.
